# NOUVEAU FASCICULE DE BREVET EUROPEEN

(11) **EP 0 778 168 B2**
(45) Date de publication et mention de la décision concernant l'opposition: **14.02.2007**
(45) Mention de la délivrance du brevet: 27.06.2001
(21) Numéro de dépôt: 96402573.8
(22) Date de dépôt: 28.11.1996
(51) Int. Cl.: B60J 1/14, B60J 1/16

(54) **Dispositif de fermeture affleurant d'une baie de véhicule automobile**
An einer Fahrzeugöffnung anliegende Schliessvorrichtung
Closing device, flush mounted on a vehicle opening

(30) Priorité: 08.12.1995 FR 9514566
(43) Date de publication de la demande: 11.06.1997
(60) Demande divisionnaire: 00107472.3
(73) Titulaire: WAGON AUTOMOTIVE SNC, 79300 Bressuire (FR)
(72) Inventeur: Neaux, Jean-Claude, 79302 Bressuire (FR)
(74) Mandataire: Vidon, Patrice

(56) Documents cités:
- EP-A- 0 037 097
- EP-A- 0 106 149
- EP-A- 0 233 143
- EP-A- 0 289 156
- EP-A- 0 307 317
- EP-A- 0 449 372
- EP-A- 0 646 483
- EP-A- 0 683 064
- EP-B- 0 148 797
- EP-B- 0 575 780
- EP-B- 0 778 168
- EP-B- 1 145 354
- BE-A- 358 158
- DE-A- 3 118 559
- FR-A- 840 548
- FR-A- 2 552 483
- FR-A- 2 679 592
- US-A- 1 809 132
- US-A- 2 282 980
- US-A- 3 478 475
- US-A- 4 396 221
- US-A- 4 571 278
- US-A- 5 154 028
- US-A- 5 171 051
- US-A- 5 522 191

## Description

La présente invention concerne un dispositif de fermeture affleurant d'une baie de carrosserie.

Le moyen le plus connu de rapporter une glace sur la baie d'un véhicule tel qu'une automobile, un autobus, un camion ou même un wagon de chemin de fer, consiste à prévoir un cadre de liaison de la glace aux bords de la baie qui est en deux parties interne et externe rapprochées l'une de l'autre pour pincer simultanément les bords de la glace et de l'ouverture avec une garniture d'étanchéité.

Un exemple de fenêtre coulissante est ainsi présenté dans le document FR-A-2 552 483. Dans ce document, on constate que les rails de guidage chevauchent les bords de la partie fixe de la fenêtre. De plus, cette partie-fixe est montée sur la carrosserie à l'aide d'un cadre faisant saillie sur la face extérieure du véhicule. Cela introduit des discontinuités visuelles (éléments formant saillie).

Le document US-A-1 809 932 présente quant à lui une fenêtre de véhicule dont la partie mobile est montée basculante. A nouveau, un cadre de liaison, ou châssis, est nécessaire pour solidariser la partie fixe et la partie mobile (montée directement sur le châssis) à la carrosserie. Ce cadre de liaison fait saillie, et introduit également des discontinuités visuelles.

Les critères d'ordre esthétique ayant évolué, la tendance est actuellement de chercher à supprimer sinon la présence du moins l'impression visuelle de rupture que constitue un cadre de manière que la glace soit perçue comme une portion transparente de la carrosserie sans solution de continuité avec elle.

Par la présente invention, on propose une solution permettant de fermer une baie de véhicule par un panneau affleurant pourvu d'une partie mobile pour assurer une fonction d'aération.

A cet effet l'invention a pour objet un dispositif de fermeture d'une baie pratiquée dans la carrosserie d'un véhicule selon la revendication 1.

Le dispositif d'obturation de la baie ne possède donc aucun cadre extérieur qui fasse saillie par rapport à la carrosserie, contrairement à ce qui est le cas aujourd'hui pour des dispositifs qui comportent des panneaux en deux parties c'est-à-dire des vitres dont une partie est mobile par rapport à une partie fixe pour assurer la ventilation ou l'aération d'une cabine ou d'un habitacle de véhicule.

L'un des modes de fixation des éléments fonctionnels sur la face interne du panneau fixe sera le collage. On peut également mettre en oeuvre des moyens de fixation traversants dont la partie située à l'extérieur du panneau peut être recouverte d'un cache relativement aplati.

Le panneau fixe peut être en une seule pièce avec un évidement fermé obturable par le panneau mobile. Dans une variante de réalisation plus économique le panneau fixe peut être reconstitué à partir de plusieurs pièces autour d'un évidement, les zones de jonction de ces pièces étant masquées par des profils affleurant de liaison et par des motifs par exemple sérigraphiés sur ces pièces. Les éléments fonctionnels peuvent également coopérer à l'assemblage des pièces constitutives du panneau fixe.

Dans une variante de réalisation, le panneau fixe comporte sur sa face interne tournée vers l'intérieur du véhicule un cadre collé éloigné du bord du panneau. On peut ainsi loger ce panneau fixe dans un renfoncement par rapport à la surface extérieure de la carrosserie au fond duquel les bords de la baie sont logés, le cadre collé pénétrant à l'intérieur du véhicule et formant support pour tout moyen d'attelage du panneau fixe tel qu'un contre-cadre ou des brides de fixation.

Selon l'invention, le panneau fixe est rapporté par collage sur les bords renfoncés de la baie de carrosserie.

Si les éléments fonctionnels comportent au moins une traverse, celle-ci s'étend jusqu'aux bords du panneau de sorte que les extrémités de la traverse sont prises en sandwich entre le panneau et les bords de la baie. Cette disposition permet de répondre à certaines exigences normatives relatives au bris de glace sur les véhicules.

Le panneau mobile qui constitue l'élément permettant l'aération souhaitée, peut être pivotant ou coulissant. Dans le cas d'un élément pivotant, la traverse constitue l'élément fixe d'une charnière longitudinale dont l'élément mobile porte le panneau mobile par collage le long d'un bord de ce panneau.

Dans le cas d'un panneau d'aération coulissant, les éléments fonctionnels comportent deux traverses parallèles de support de rails de guidage pour ce panneau, les rails ayant éventuellement une forme appropriée pour un mouvement louvoyant de ce panneau mobile par rapport au panneau fixe.

D'autres caractéristiques et avantages de l'invention ressortiront de la description donnée ci-après de plusieurs modes de sa réalisation.

Il sera fait référence aux dessins annexés parmi lesquels :
- la figure 1 est une vue de face d'un premier mode de réalisation du dispositif selon l'invention,
- la figure 2 est une coupe selon le plan II-II de la figure 1,
- la figure 3 est une vue en coupe selon le plan III-III de la figure 1,
- la figure 4 est une vue en coupe selon le plan IV-IV de la figure 1,
- la figure 5 est une vue en coupe d'un second mode de réalisation de l'invention,
- la figure 6 est une vue générale d'un troisième mode de réalisation de l'invention.

Sur ces figures, la référence 1 correspond à un panneau de carrosserie de véhicule dans lequel on a ménagé une baie 2. Les bords de la baie sont en léger renfoncement par rapport à la surface extérieure de la carrosserie de manière à pouvoir accueillir un panneau d'obturation qui soit affleurant avec la surface extérieure du panneau 1. Ces bords portent la référence 3 sur les figures.

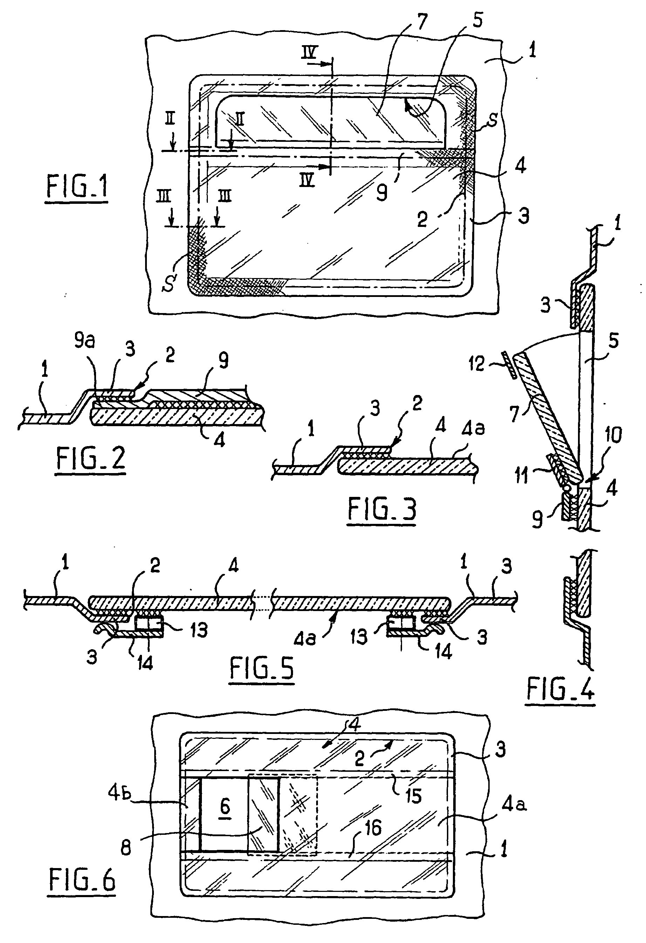

La fermeture de cette baie est réalisée par un panneau 4 logé dans le creux dont les bords 3 de la baie 2 forment le fond et collé par sa périphérie sur ces bords 3. Le panneau 4 est découpé pour offrir une ouverture 5 (figure 1) ou 6 (figure 6) qui peut être obturée par un panneau secondaire mobile 7 (figure 1) et 8 (figure 6). Le panneau 7 de la figure 1 est monté articulé au moyen d'une traverse 9 elle-même collée sur la face intérieure du panneau 4, par exemple au voisinage immédiat du bord de l'ouverture 5. L'une des particularités du mode de réalisation représenté est que cette traverse 9 se prolonge jusque sous le bord du panneau qui est collé sur le bord 3 de la baie 2. Ainsi, comme illustré dans la figure 2, chaque extrémité 9a de la traverse 9 est prise en sandwich entre ce bord 3 et ce panneau 4.

La figure 4 illustre le fait que la traverse 9 est en réalité une aile d'une charnière 10 dont l'axe de pivotement s'étend parallèlement au bord le plus long de l'ouverture 5, l'autre aile 11 de cette charnière 10 formant le support du panneau 7. En effet le panneau 7 est rapporté par collage sur l'aile 11 dans une zone adjacente à son bord inférieur. Le bord supérieur du panneau peut comprendre une butée 12 qui coopère avec l'élément de carrosserie ou la partie supérieure du panneau 4 pour maintenir le panneau 7 en position fermée et assurer au moyen d'éléments non représentés l'étanchéité de la fermeture.

La variante de réalisation représentée à la figure 5 comporte la plupart des éléments déjà décrits avec les mêmes références. Le panneau 4 porte ici sur sa face intérieure 4a un cadre 13 qui forme une structure fermée à l'intérieur du panneau et écartée du bord périphérique de ce panneau d'une distance suffisante pour que ce panneau puisse être rapporté par collage entre les bords 3 de la baie 2. Ce cadre 13 peut constituer le support d'un certain nombre d'accessoires notamment pour la fixation du panneau sur la carrosserie au moyen par exemple de brides 14. On remarquera à la figure 1 que pour masquer les zones de collage, le panneau fixe 4 comporte des motifs sérigraphiés sur sa périphérie et au niveau de la traverse 9. Cette sérigraphie, connue en elle-même sur les vitres de véhicules, permet également de masquer des cabochons de couverture de têtes de vis ou de rivet qui pourraient être utilisés pour fixer la traverse 9 au panneau 4, aux lieu et place du collage ou en complément de celui-ci.

Enfin à la figure 6, on notera que le panneau 4 est en plusieurs parties (ici deux parties 4a et 4b qui délimitent l'ouverture 6 (la partie 4a possédant trois côtés de l'ouverture et le panneau 4b le quatrième). Les panneaux sont réunis par tous moyens appropriés disposés sur la face intérieure auxquels peuvent participer un cadre et les traverses fonctionnelles de liaison du panneau mobile. Les zones de jonction des pièces formant le panneau fixe sont disposées dans des zones sérigraphiées. A cette figure le panneau 8 destiné à obturer l'ouverture 6 ménagée dans le panneau 4 est monté coulissant entre deux traverses 15 et 16, ces traverses 15 et 16 ayant leurs extrémités pouvant être disposées comme l'extrémité 9a de la traverse 9 illustrée par la figure 2. Les traverses 15 et 16 sont ici représentées de manière simple et le panneau 8 coulisse dans un plan différent de celui du panneau 4, du côté intérieur de celui-ci. Ce n'est pas sortir de l'invention que de prévoir de manière connue que les coulisses 15 et 16 soit équipées de rampes pour que le panneau 8 ait au droit de l'ouverture 6 un mouvement louvoyant permettant son placement dans le plan même du panneau 4.

De manière préférée, les panneaux 4, 7 et 8 seront des glaces, glaces qui malgré le fait qu'elles soient équipées d'éléments mobiles permettant l'aération de l'habitacle du véhicule, sont toujours affleurantes par rapport à la carrosserie de ce véhicule. L'avantage esthétique d'une telle disposition se traduit par une absence de solution de continuité, au moins visuelle, entre la carrosserie et la glace.

Ce n'est pas sortir du cadre de l'invention que de prévoir des éléments du panneau 4 (lorsqu'il est en plusieurs pièces) qui ne soient pas en glace mais en une autre matière. Un panneau fixe, conformément à l'invention, doit se comprendre comme un élément monobloc qui se rapporte sur la carrosserie du véhicule, cet élément en une ou plusieurs parties préassemblées étant porteur du panneau mobile et des éléments fonctionnels de liaison.

## Revendications

1. Dispositif de fermeture affleurant, destiné à fermer une baie (2) pratiquée dans la carrosserie (1) d'un véhicule, ledit dispositif comprenant un panneau fixe (4) et un panneau mobile (7, 8) par rapport au panneau fixe (4),
**caractérisé en ce que** ledit panneau fixe (4) porte une ouverture (6), dont les bords sont éloignés de la périphérie dudit panneau fixe (4),
ledit panneau mobile (5) pouvant venir obturer ladite ouverture (6), en venant dans le plan même dudit, panneau fixe,
des éléments fonctionnels (9) assurant la mobilité requise du panneau mobile par rapport au panneau fixe étant montés sur la face dudit panneau fixe (4) tournée vers l'intérieur du véhicule,
au moins un desdits éléments fonctionnels (9) se prolongeant jusque sous ladite périphérie du panneau fixe (4),
et **en ce que** ledit panneau fixe est rapporté sur ladite carrosserie par collage de la périphérie de ladite face du panneau fixe (4) tournée vers l'intérieur du véhicule aux bords (3) de ladite baie (2),
les bords (3) de ladite baie (2) étant légèrement en retrait de ladite carrosserie (1), de façon à pouvoir accueillir ledit panneau fixe (4) de manière affleurante par rapport à la carrosserie (1), de façon à assurer une continuité visuelle entre les carrosserie (1) et ledit dispositif et **en ce que** les extrémités d'au moins un desdits éléments fonctionnels qui se prolongent jusque sous la périphérie du panneau fixe (4) sont prises en sandwich entre ledit panneau fixe (4) et lesdits bords (3) de la baie.

2. Dispositif selon la revendication 1, **caractérisé en ce que** le panneau fixe (4) est en une seule pièce dans laquelle est ménagé un évidement (5) fermé obturable par le panneau mobile (7).

3. Dispositif selon la revendication 1, **caractérisé en ce que** le panneau fixe (4) est formé de plusieurs pièces (4a, 4b) possédant chacune au moins un bord délimitant un évidement fermé (6) obturable par le panneau mobile (8).

4. Dispositif selon la revendication 1, **caractérisé en ce que** les éléments fonctionnels (9, 15, 16) sont rapportés par collage sur la face du panneau fixe (4) tournés vers l'intérieur du véhicule.

5. Dispositif selon l'une quelconque des revendications précédentes,
**caractérisé en ce que** les éléments fonctionnels comportent une traverse (9) qui constitue l'élément fixe d'une charnière (10) longitudinale dont l'élément mobile (11) porte le panneau mobile (7) par collage le long d'un bord de ce panneau (7).

6. Dispositif selon l'une des revendications 1 à 4, **caractérisé en ce que** les éléments fonctionnels comportent deux traverses parallèles (15,16) de support de rails de guidage pour un mouvement coulissant du panneau mobile (8) par rapport au panneau fixe (4).

7. Dispositif selon la revendication 1, **caractérisé en ce que** le panneau fixe (4) comporte sur sa face tournée vers l'intérieur du véhicule, un cadre (13) collé éloigné du bord du panneau (4).

8. Procédé de fabrication et de montage d'un dispositif de fermeture affleurant selon l'une des revendications précédentes, destiné à fermer une baie pratiquée dans la carrosserie (1) d'un véhicule, **caractérisé en ce qu'**il comprend les étapes suivantes :
- obtention d'un panneau fixe (4) présentant une ouverture (6), dont les bords sont éloignés de la périphérie dudit panneau fixe (4), et d'un panneau mobile (5) prévu pour pouvoir fermer ladite ouverture;
- montage dudit panneau mobile (5) sur ledit panneau fixe (4), à l'aide d'éléments fonctionnels (9) assurant la mobilité requise, lesdits éléments fonctionnels étant placés sur la face dudit panneau fixe (4) tournée vers l'intérieur du véhicule, au moins un desdits éléments fonctionnels (9) se prolongeant jusque sous ladite périphérie du panneau fixe (4);
- montagne dudit panneau fixe sur ladite carrosserie, par collage de la périphérie de ladite face du panneau fixe tournée vers l'intérieur de véhicule aux bords (3) de ladite baie (2) en retrait de ladite carrosserie, de façon à assurer une continuité visuelle entre la carrosserie (1) et ledit dispositif de fermeture, les extrémités d'au moins un desdits éléments fonctionnels qui se prolongent jusque sous la périphérie du panneau fixe (4) étant prises en sandwich entre ledit panneau fixe (4) et lesdits bords (3) de la baie.

## Claims

1. Flush closure device, which is designed to close a window (2) provided in the bodywork (1) of a vehicle, the said device comprising a fixed panel (4) and a panel (7, 8) which is mobile relative to the fixed panel (4), **characterised in that** the said fixed panel (4) contains an aperture (6), the edges of which are spaced from the periphery of the said fixed panel (4), the said mobile panel (5) being able to shut the said aperture (6) by being moved onto the plane itself of the said fixed panel, the functional elements (9) which assure the required mobility of the panel which is mobile relative to the fixed panel being mounted on the surface of the said fixed panel (4) which faces towards the interior of the vehicle, at least one of the said functional elements (9) extending under the said periphery of the fixed panel (4), and **in that** the said fixed panel is added on to the said bodywork by gluing of the periphery of the said surface of the fixed panel (4) which faces the interior of the vehicle at the edges (3) of the said window(2), the edges (3) of the said window (2) being slightly recessed from the said bodywork (1) such as to be able to accommodate the said fixed panel (4) in a manner which is sufficiently flush relative to the bodywork (1), so as to assure visual continuity between the bodywork (1) and the said device, and **in that** the ends of at least one of the said functional elements which extend under the periphery of the fixed panel (4) are sandwiched between the said fixed panel (4) and the said edges (3) of the window.

2. Device according to claim 1, **characterised in that** the fixed panel (4) is in a single piece in which there is provided a closed recess (5) which can be shut by the mobile panel (7).

3. Device according to claim 1, **characterised in that** the fixed panel (4) is formed by a plurality of parts (4a, 4b), each of which has at least one edge which delimits a closed recess (6) which can be shut by the mobile panel (8).

4. Device according to claim 1, **characterized in that** the functional elements (9, 15, 16) are attached by bonding to that face of the fixed panel (4) which faces towards the inside of the vehicle.

5. Device according to any one of the preceding claims, **characterized in that** the functional elements comprise a cross member (9) which constitutes the fixed element of a longitudinal hinge (10), the moving element (11) of which carries the moving panel (7) by being bonded along one edge of this panel (7).

6. Device according to one of claims 1 to 4, **characterized in that** the functional elements comprise two parallel cross members (15, 16) for supporting guide rails for a sliding movement of the moving panel (8) with respect to the fixed panel (4).

7. Device according to claim 5 or claim 6, **characterized in that** the cross members (9, 15, 16) extend right up to the edge of the fixed panel (4).

8. Method for production and fitting of a flush closure device according to any one of the preceding claims, which device is designed to close a window provided in the bodywork (1) of a vehicle, **characterised in that** it comprises the following steps:
- obtaining a fixed panel (4) which has an aperture (6), the edges of which are spaced from the periphery of the said fixed panel (4), and a mobile panel (5) which is designed to be able to close the said aperture;
- fitting of the said mobile panel (5) on the said fixed panel (4) by means of functional elements (9) which assure the required mobility, the said functional elements being placed on the surface of the said fixed panel (4) which faces the interior of the vehicle, at least one of the said functional elements (9) extending under the said periphery of the fixed panel (4);
- fitting of the said fixed panel on the said bodywork, by gluing of the periphery of the said surface of the fixed panel which faces the interior of the vehicle at the edges (3) of the said window (2) recessed from the said bodywork, such as to assure visual continuity between the bodywork (1) and the said closure device, and the ends of at least one of the said functional elements which extend under the periphery of the fixed panel (4) are sandwiched between the said fixed panel (4) and the said edges (3) of the window.

## Patentansprüche

1. Vorrichtung zum bündigen Verschließen einer Öffnung (2) in der Karosserie (1) eines Fahrzeuges, wobei die Vorrichtung eine feststehende Platte (4) und eine gegenüber der feststehenden Platte (4) bewegliche Platte (7, 8) umfasst,
**dadurch gekennzeichnet, dass** die feststehende Platte (4) eine Öffnung (6) aufweist, deren Ränder vom Umfang der besagten festen Platte (4) entfernt sind,
wobei die bewegliche Platte (5) die Öffnung (6) verschließen kann, indem sie in die Ebene der besagten feststehenden Platte gebracht wird,
wobei die Funktionselemente (9), welche die erforderliche Beweglichkeit der beweglichen Platte im Verhältnis zur feststehenden Platte sichern, auf der zum Fahrzeuginneren gewandten Fläche der feststehenden Platte (4) angebracht sind,
wobei mindestens eines dieser Funktionselemente (9) sich bis unter den Umfang der feststehenden Platte (4) erstreckt,
und **dadurch**, dass die feststehende Platte auf die Karosserie durch Kleben des Umfangs der besagten, zum Fahrzeuginneren gewandten Fläche der feststehenden Platte (4) auf die Ränder (3) der Öffnung (2) aufgebracht werden,
wobei die Ränder (3) dieser Öffnung (2) gegenüber der Karosserie (1) leicht nach hinten versetzt sind, um in der Lage zu sein, die feststehende Platte (4) bündig mit der Karosserie (1) aufzunehmen, um eine visuell durchgehende Fläche zwischen Karosserie (1) und Vorrichtung zu erreichen,
und **dadurch**, dass die Enden von mindestens einem der besagten Funktionselemente, die sich bis unter den Umfang der feststehenden Platte (4) erstrecken, zwischen der besagten feststehenden Platte (4) und den Rändern (3) der besagten Öffnung eingeklemmt sind.

2. Vorrichtung gemäß Anspruch 1,
**dadurch gekennzeichnet, dass** die feststehende Platte (4) in einem Teil gefertigt ist, in dem eine geschlossene Aussparung (5) eingelassen ist, die von der beweglichen Platte (7) verschlossen werden kann.

3. Vorrichtung gemäß Anspruch 1,
**dadurch gekennzeichnet, dass** die feststehende Platte (4) aus mehreren Teilen (4a, 4b) besteht, die jeweils mindestens einen Rand haben, der eine geschlossene Aussparung (6) abgrenzt, die von der beweglichen Platte (8) verschlossen werden kann.

4. Vorrichtung gemäß Anspruch 1,
**dadurch gekennzeichnet, dass** die Funktionselemente (9, 15, 16) auf die zum Fahrzeuginneren weisende Fläche der feststehenden Platte (4) aufgeklebt sind.

5. Vorrichtung gemäß einem der vorhergehenden Ansprüche,
**dadurch gekennzeichnet, daß** die Funktionselemente eine Querleiste (9) umfassen, welche das feststehende Element eines längsgerichteten Scharniers (10) bildet, dessen bewegliches Element (11) die bewegliche Platte (7) trägt, wobei die Querleiste entlang eines Randes der Platte (7) aufgeklebt ist.

6. Vorrichtung gemäß einem der Ansprüche 1 bis 4,
**dadurch gekennzeichnet, daß** die Funktionselemente zwei parallele Querleisten (15, 16) umfassen, welche Führungsschienen tragen, um das Verschieben der beweglichen Platte (8) gegenüber der feststehenden Platte (4) zu gewährleisten.

7. Vorrichtung gemäß Anspruch 5 oder 6,
**dadurch gekennzeichnet, daß** die Querleisten (9, 15, 16) sich bis an den Rand der feststehenden Platte (4) erstrecken.

8. Fertigungs- und Montageverfahren einer Vorrichtung zum bündigen Verschließen gemäß einem der vorhergehenden Ansprüche, zum Schließen einer Öffnung in der Karosserie (1) eines Fahrzeugs,
**dadurch gekennzeichnet, dass** es die folgenden Schritte umfasst:
- Erstellen einer feststehenden Platte (4), die eine Öffnung (6), deren Ränder von dem Umfang der besagten feststehenden Platte (4) entfernt sind sowie eine zum Schließen der besagten Öffnung vorgesehene bewegliche Platte (5) aufweist;
- Anbringen dieser beweglichen Platte (5) auf der feststehenden Platte (4) mit Hilfe von Funktionselementen (9), welche die erforderliche Beweglichkeit gewährleisten, wobei die besagten Funktionselemente auf der zum Fahrzeuginneren gewandten Fläche der feststehenden Platte (4) angebracht sind, wobei mindestens eines der Funktionselemente (9) sich bis unter den Umfang der feststehenden Platte (4) erstreckt;
- Anbringen der besagten feststehenden Platte an der Karosserie durch Kleben des Umfangs der besagten zum Fahrzeuginneren gewandten Fläche der feststehenden Platte auf die Ränder (3) der gegenüber der Karosserie nach hinten versetzten Öffnung (2), um eine visuell durchgehende Fläche zwischen Karosserie (1) und der besagten Verschlussvorrichtung zu erreichen,
wobei die Enden von mindestens einem der besagten Funktionselemente, die sich bis unter den Umfang der feststehenden Platte (4) erstrecken, zwischen der besagten feststehenden Platte (4) und den Rändern (3) der besagten Öffnung eingeklemmt werden.
